# FASCICULE DE BREVET EUROPEEN

(11) **EP 3 155 270 B1**
(45) Date de publication et mention de la délivrance du brevet: **22.07.2020**
(21) Numéro de dépôt: 15728572.7
(22) Date de dépôt: 16.06.2015
(51) Int. Cl.: F16B 3/00, H01M 2/10

(54) **MOYEN DE CALAGE D'UN GENERATEUR ELECTROCHIMIQUE DANS UNE BATTERIE**
MITTEL ZUM VERKEILEN EINES ELEKTROCHEMISCHEN GENERATORS IN EINER POSITION IN EINER BATTERIE
MEANS FOR WEDGING AN ELECTROCHEMICAL GENERATOR IN POSITION IN A BATTERY

(30) Priorité: 16.06.2014 FR 1455488
(43) Date de publication de la demande: 19.04.2017
(73) Titulaire: Saft Groupe S.A., 93170 Bagnolet (FR)
(72) Inventeur: TURBE, Benoît, F-33530 Bassens (FR)
(74) Mandataire: Hirsch & Associés
(86) Numéro de dépôt international: PCT/EP2015/063467
(87) Numéro de publication internationale: WO 2015/193307

(56) Documents cités:
- EP-A1- 1 199 344
- WO-A1-2008/103220
- WO-A1-2013/120770
- US-A- 4 019 630

## Description

### DOMAINE TECHNIQUE

Le domaine technique de l'invention est celui des moyens de calage des générateurs électrochimiques dans une batterie. La présente invention propose une batterie comprenant au moins un générateur électrochimique, en particulier au lithium, et au moins un moyen de calage dudit générateur dans la batterie. Le domaine technique est aussi celui des procédés de fabrication d'une batterie.

### ETAT DE LA TECHNIQUE

Un générateur électrochimique est un dispositif de production d'électricité dans lequel de l'énergie chimique est convertie en énergie électrique. L'énergie chimique est constituée par des composés électrochimiquement actifs déposés sur au moins une face d'électrodes disposées dans le générateur électrochimique. L'énergie électrique est produite par des réactions électrochimiques au cours d'une décharge du générateur électrochimique. Les électrodes, disposées dans un conteneur, sont connectées électriquement à des bornes de sortie de courant qui assurent une continuité électrique entre les électrodes et un consommateur électrique auquel le générateur électrochimique est associé. Les bornes de sortie de courant positive et négative peuvent être fixées soit sur les parois de faces opposées du conteneur du générateur électrochimique, soit sur la paroi d'une même face du conteneur.

Plusieurs générateurs électrochimiques peuvent être connectés ensemble en série ou en parallèle en fonction de la tension nominale de fonctionnement du consommateur électrique et de la quantité d'énergie qu'il est prévu de fournir à ce consommateur. Les générateurs électrochimiques sont alors placés dans un boîtier commun, encore appelé coffre de groupement, et l'on désigne généralement l'ensemble du boîtier et de la pluralité de générateurs électrochimiques qu'il renferme par le terme de batterie. Dans un souci de commodité de branchement électrique entre des générateurs électrochimiques placés dans une batterie, les bornes de sortie de courant positive et négative sont souvent fixées sur la paroi d'une même face du conteneur.

En l'absence de calage, lorsqu'une batterie est soumise à des sollicitations mécaniques, telles que des vibrations ou des chocs, les générateurs électrochimiques se déplacent de manière aléatoire dans le coffre de groupement de la batterie. Ces déplacements entrainent de fortes contraintes pouvant provoquer des dégradations ou des ruptures des composants de la batterie, voire des générateurs électrochimiques eux-mêmes.

Le calage des générateurs électrochimiques se fait actuellement par différentes solutions mécaniques, notamment dans l'objectif de bloquer mécaniquement les générateurs dans leurs déplacements relatifs par rapport au coffre de groupement de la batterie.

Le document GB 938359 décrit une batterie de générateurs électrochimiques comprenant un coffre dans lequel est disposée une pluralité de générateurs électrochimiques. Le maintien des générateurs est assuré par l'emploi d'une mousse ou résine qui comble l'espace entre les générateurs électrochimiques.

Un calage par l'injection de résine expansive ou non expansive nécessite une infrastructure et des équipements particuliers. La durée de fabrication d'une telle batterie est peu compatible avec la production à l'échelle industrielle. De plus, une grande quantité de résine est requise pour pouvoir caler tous les générateurs d'une batterie. Cette grande quantité de résine alourdit la batterie.

Une autre solution aujourd'hui proposée pour le calage de générateurs électrochimiques au sein d'une batterie consiste en l'utilisation d'un anneau en polymère élastomère plus ou moins déformable, tel que décrit dans le document EP2403050. La propriété déformable de l'anneau polymère fait qu'en vibration, le système formé par la batterie comprenant ledit anneau polymère induit des modes propres de vibration de basse fréquence, ce qui est pénalisant pour la structure mécanique. En effet, l'anneau en polymère élastomère reste souple, même après assemblage des générateurs électrochimiques de la batterie.

Le document WO 2013/120770 décrit un coffre renfermant une pluralité de générateurs électrochimiques. Les générateurs sont calés dans ce coffre à l'aide d'un élément de fixation qui contient un matériau de remplissage durcissable. Cet élément de fixation est creux et déformable. Il peut s'expanser en cas d'augmentation de la pression interne, avant durcissement du matériau de remplissage.

Dans ce document, l'élement de fixation est placé entre les générateurs électrochimiques. Cette disposition de l'élément de fixation ne permet pas de garantir un calage du générateur électrochimique sur la totalité de la périphérie du conteneur du générateur électrochimique car toute la périphérie du conteneur n'est pas en contact avec l'élément de fixation. De plus, certaines portions de l'élément de fixation ne sont pas en contact avec le conteneur du générateur. La solution proposée dans ce document ne permet donc pas un calage rigide / blocage du générateur vis-à-vis du coffre à la fois selon une direction radiale et une direction axiale.
De plus, cette disposition de l'élément de fixation ne permet pas de dégager un espace sous le fond du conteneur du générateur. Un tel espace est nécessaire lorsque un système de sécurité est situé sur le fond du conteneur du générateur. Un tel système de sécurité est par exemple décrit dans FR 2 873 495. Dans le document WO 2013/120770, les générateurs électrochimiques reposent directement sur le fond du coffre et il n'existe pas d'espace permettant de recevoir les gaz libérés du générateur lors du déclenchement du système de sécurité.

La présente invention vise donc à fournir un moyen mécanique pour caler les générateurs électrochimiques qui surmonte les inconvénients ci-dessus.

### RESUME DE L'INVENTION

A cette fin, la présente invention propose une batterie comprenant au moins un générateur électrochimique et au moins un moyen de calage dudit générateur dans la batterie, le moyen de calage étant obtenu après réticulation des composants d'un joint, ledit joint comprenant au moins deux enveloppes déformables, chaque enveloppe contenant un composant et comprenant un opercule, la mise en contact du composant contenu dans une enveloppe avec le composant contenu dans une autre enveloppe provoquant une réticulation du mélange des deux composants, ledit générateur électrochimique comprenant un conteneur comportant un fond, le fond du conteneur étant en contact avec le joint.

Selon un mode de réalisation de l'invention, le composant contenu dans une enveloppe est une composition de base et le composant contenu dans l'autre enveloppe est une composition de durcisseur, la composition de base et la composition de durcisseur étant les composants d'une colle bi-composant.

Selon un mode de réalisation de l'invention, les enveloppes sont fixées les unes aux autres par soudure, de préférence par vulcanisation, par ultra-son ou par collage.

Selon un mode de réalisation de l'invention, la mise en contact des composants contenus dans chaque enveloppe s'effectue après rupture des opercules de chaque enveloppe.

Selon un mode de réalisation de l'invention, sous l'action d'une contrainte mécanique, les opercules se rompent et les composants contenus dans chaque enveloppe sont mis en contact pour obtenir la réticulation.

Selon un mode de réalisation de l'invention, la réticulation des composants aboutit à une résine choisie parmi les polyépoxydes, les polyesters vinyliques, les polyacryliques, les polyacrylates ou leurs mélanges.

Selon un mode de réalisation de l'invention, le joint présente un espace vide entre lesdites enveloppes.

Selon un mode de réalisation de l'invention, le joint présente la forme d'un anneau dans lequel chaque enveloppe représente une portion de l'anneau.

Selon un mode de réalisation de l'invention, le joint est constitué de deux enveloppes, chacune des deux enveloppes présentant la forme d'un demi-anneau.

Selon un mode de réalisation de l'invention, chaque enveloppe comprend une extrémité présentant une partie mâle et une extrémité présentant une partie femelle, la partie mâle de l'extrémité de l'une des enveloppes s'insérant dans la partie femelle de l'extrémité d'une autre enveloppe.

Selon un mode de réalisation de l'invention, l'extrémité de la partie mâle est obturée par un opercule et la partie mâle comprend un moyen de rupture de l'opercule.

La présente invention propose également l'utilisation du joint selon l'invention, pour caler au moins un générateur électrochimique dans le coffre de groupement d'une batterie, ledit joint comprenant au moins deux enveloppes déformables, chaque enveloppe contenant un composant et comprenant un opercule, la mise en contact du composant contenu dans une enveloppe avec le composant contenu dans une autre enveloppe provoquant une réticulation du mélange des deux composants, ledit générateur électrochimique comprenant un conteneur comportant un fond, le fond du conteneur étant en contact avec le joint.

La présente invention propose également un procédé d'assemblage d'une batterie comprenant au moins un générateur électrochimique, ledit procédé comprenant les étapes suivantes :
- mise à disposition d'un coffre de groupement comprenant une surface d'appui,
- mise en place d'au moins un joint selon l'invention dans le coffre de groupement au contact de la surface d'appui, ledit joint comprenant au moins deux enveloppes déformables, chaque enveloppe contenant un composant et comprenant un opercule, la mise en contact du composant contenu dans une enveloppe avec le composant contenu dans une autre enveloppe provoquant une réticulation du mélange des deux composants ;
- mise en place d'au moins un générateur électrochimique comprenant un conteneur comportant un fond, le fond du conteneur étant en contact avec le joint,
- rupture des opercules et mise en contact des composants contenus dans les enveloppes du joint sous l'action de la contrainte mécanique exercée par le générateur électrochimique,
- rigidification du joint.

Le joint selon la présente invention est léger, ce qui représente un gain de masse par rapport à un remplissage par de la mousse.

Le joint selon la présente invention est facilement intégrable sur différents designs de générateurs électrochimiques et de batteries.

Le joint selon la présente invention est implantable en production, à l'échelle industrielle.

Le joint selon la présente invention permet d'obtenir une batterie qui soit robuste, qui résiste notamment aux vibrations et aux chocs que peut subir une batterie.

Le joint selon l'invention, après durcissement forme un moyen de calage. En s'écrasant, le joint selon l'invention peut combler tous les jeux d'assemblage entre un objet à caler et sa pièce d'accueil, par exemple entre un générateur électrochimique et une surface d'appui, tel que le fond du coffre ou un élément de support mécanique posé sur le fond du coffre de groupement d'une batterie.

Le joint selon l'invention est autosuffisant, i.e. qu'il s'amorce lors de l'assemblage.

La compression du joint entre le générateur électrochimique et sa surface d'appui force son enveloppe à entrer dans les jeux résiduels de l'assemblage afin de combler ces jeux de manière souple dans un premier temps. Lorsque le joint subit une contrainte mécanique, tel qu'un écrasement, les opercules séparant les composants des enveloppes, tels que compositions de base et de durcisseur se rompent et les composants contenus dans les enveloppes se mélangent. Après mélange, la résine commence alors son processus de réticulation voire d'émulsion.

La résine ainsi réalisée se répartit dans le volume de son enveloppe épousant maintenant les jeux résiduels entre le générateur électrochimique et sa surface d'appui. On obtient après réticulation, un joint rigide (désigné aussi sous l'expression « moyen de calage »). Une fois la réticulation et éventuellement l'émulsion finie, la résine est dure et le joint est déformé de sorte à réaliser un calage rigide adapté entre chaque générateur électrochimique et sa surface d'appui.

### BREVE DESCRIPTION DES FIGURES

La figure 1 représente des coupes transversales selon plusieurs modes de réalisation du joint selon l'invention.
La figure 2 représente des coupes transversales selon plusieurs modes de réalisation du joint selon l'invention.
La figure 3 représente schématiquement un mode de réalisation du joint selon l'invention.
La figure 4 représente schématiquement un mode de réalisation du joint selon l'invention.
La figure 5 représente l'utilisation du joint selon l'invention pour caler un objet, tel qu'un générateur électrochimique.

### EXPOSE DE MODES DE REALISATION

Il est décrit en premier lieu un joint comprenant au moins deux enveloppes déformables.

Selon un mode de réalisation, le joint est constitué de deux, de trois ou de quatre enveloppes déformables. De préférence, le joint est constitué de deux ou de quatre enveloppes déformables, de préférence encore, de deux enveloppes déformables.

L'enveloppe déformable comprend au moins un opercule et contient un composant.

Au sens de la présente invention, on entend par « opercule », une membrane fragile qui peut facilement se rompre sous l'action d'une contrainte mécanique, tel qu'un écrasement ou une compression. L'opercule peut être un matériau choisi parmi l'aluminium, le papier ou les plastiques, tels que les caoutchoucs synthétiques. L'opercule peut être posé et fixé sur l'enveloppe par vulcanisation ou par soudure haute fréquence. L'opercule présente de préférence une épaisseur allant de 3 à 10 fois plus faible que l'épaisseur de la membrane de l'enveloppe, de préférence de l'ordre de 5 fois plus faible. L'homme du métier saura adapter le matériau de l'opercule en fonction du matériau de l'enveloppe. A titre d'exemple, on pourra utiliser une enveloppe en caoutchouc, telle qu'en caoutchouc synthétique, et un opercule en caoutchouc, tel qu'en caoutchouc synthétique, l'opercule ayant une épaisseur plus faible que l'épaisseur de la membrane de l'enveloppe.

Au sens de la présente invention, on entend par « enveloppe », un corps creux ayant un certain volume pouvant contenir un composant qui peut être sous forme liquide ou solide. L'enveloppe selon l'invention comprend au moins une ouverture permettant son remplissage par un composant et permettant sa fermeture par au moins un opercule.

Les enveloppes selon l'invention comprennent au moins un opercule, c'est-à-dire qu'au moins une portion de la membrane formant l'enveloppe est fragile et est désignée par le terme d'opercule. En dehors de l'opercule, la membrane de l'enveloppe n'est pas fragile. C'est-à-dire que la membrane de l'enveloppe ne peut pas se rompre par une simple contrainte mécanique, tel qu'un écrasement ou une pression. Le matériau de l'enveloppe est adapté à la déformation que peut subir l'enveloppe, notamment à la déformation due à la réticulation du mélange des composants contenus dans les enveloppes. Il se déforme mais ne se rompt pas sous l'effet de la réticulation du mélange, ni sous l'effet d'une augmentation du volume du mélange.

On entend par enveloppe « déformable », une enveloppe dont la forme et/ou le volume peut/peuvent être modifié(e)(s). En effet, au sein du joint selon l'invention, les composants contenus dans les enveloppes sont aptes à être mis en contact pour provoquer la réticulation du mélange des composants.

Sous l'action d'une contrainte mécanique qui peut survenir lors de la mise en place d'un générateur électrochimique sur le joint selon l'invention placé au contact d'une surface d'appui, tel que le fond d'un coffre de groupement de batterie ou un élément de support posé sur le fond du coffre de groupement de batterie, les opercules se rompent et les composants présents dans chacune des enveloppes sont mis en contact de façon à provoquer une réticulation, voire une émulsion pendant laquelle/lesquelles la résine, constituée du mélange des deux composants, se répand et peut éventuellement augmenter son volume. Ainsi, grâce à la structure déformable des enveloppes, la résine s'adapte à son environnement et remplit les espaces vides. Après réticulation et/ou émulsion, la résine qui est maintenue dans le joint est dure. Le joint est alors déformé et rigide, ce qui permet de caler mécaniquement un élément dans la pièce d'accueil, tel qu'un générateur électrochimique dans le coffre de groupement d'une batterie.

De préférence, les enveloppes déformables sont formées de matériaux présentant un module d'Young inférieur ou égal à 150 GPa, de préférence inférieur ou égal à 125 GPa, de préférence encore inférieur ou égal à 100 GPa.

De préférence, la membrane de l'enveloppe a une épaisseur allant de 0,25 à 1,50 mm, de préférence de 0,30 à 1,25 mm, de préférence encore de 0,40 à 1,00 mm.

De préférence, la membrane de l'enveloppe est un matériau choisi parmi les caoutchoucs naturels ou synthétiques, les silicones, les fluorosilicones, le néoprène, les polysulfures, le butadiène-acrylonitrile.

Le caoutchouc peut être un caoutchouc naturel par exemple obtenu à partir de l'hévéa ou un caoutchouc synthétique qui peut être obtenu par polymérisation de l'isoprène.

Le matériau de l'enveloppe peut être adapté en fonction de la résine qui sera obtenue après réticulation du mélange des composants, selon la faculté ou non de la résine à augmenter de volume lors de sa réticulation. En effet, dans le cas où la résine n'augmentera pas de volume, l'enveloppe ne devra pas nécessairement avoir la capacité à augmenter de volume. Dans ce cas, il suffira que l'enveloppe puisse modifier sa forme pour s'adapter à l'expansion de la résine (sans modification de volume). En revanche, dans le cas où la résine augmentera de volume, l'enveloppe devra avoir la capacité d'augmenter de volume, en plus de la capacité à modifier sa forme pour s'adapter à l'expansion de la résine (avec augmentation de volume).

De préférence, au moins 50% du volume de l'enveloppe est rempli par le composant, de préférence au moins 75% du volume de l'enveloppe, de préférence la totalité du volume de l'enveloppe est rempli par le composant.

Selon un mode de réalisation, le composant contenu dans une des deux enveloppes est une composition de base et le composant contenu dans l'autre enveloppe est une composition de durcisseur. On désigne par « composition de base » et « composition de durcisseur », les composants d'une colle bi-composant. Au sein du joint selon l'invention, la composition de la base et la composition du durcisseur sont choisies de telle manière que le mélange de la composition de la base avec la composition de durcisseur provoque la réticulation du mélange.

La composition de la base comprend au moins un polymère et la composition du durcisseur comprend au moins un agent de réticulation, l'agent de réticulation étant susceptible de provoquer la réticulation du polymère.

De préférence, la composition de la base comprend au moins un polymère réticulable, de préférence choisi parmi les époxys, les (poly)acryliques, les (poly)acrylates, les (poly)esters vinyliques, ou leur mélange.

L'homme du métier sait quel type de durcisseur peut être utilisé pour provoquer la réticulation d'une composition de base telle que décrite ci-dessus.

De préférence, la composition du durcisseur comprend au moins un agent de réticulation choisi parmi les anhydrides, les acides carboxyliques, les composés amine, les composés phénoliques, les polyols, les polyamides, les composés isocyanates, les péroxydes, tels que les péroxydes organiques.

A titre d'exemple, lorsque la composition de la base comprend un époxy, la composition du durcisseur comprendra de préférence un composé choisi parmi les anhydrides, les acides carboxyliques, les composés amine, les composés phénoliques, les polyols, ou leurs mélanges. Lorsque la composition de la base comprend une base (poly)acrylate et/ou (poly)acrylique, la composition de durcisseur comprendra de préférence un composé choisi parmi les isocyanates, les péroxydes ou leurs mélanges. Lorsque la composition de base comprend un (poly)ester vinylique, la composition de durcisseur comprendra de préférence un composé choisi parmi les monomères vinyliques, les péroxydes, de préférence les péroxydes organiques.

De préférence, les enveloppes présentes dans le joint selon l'invention sont disposées de telle sorte que, lorsqu'une contrainte mécanique est appliquée, la rupture d'un opercule d'une enveloppe permet la mise en contact du composant contenu dans ladite enveloppe avec le composant contenu dans l'autre enveloppe provoquant alors une réticulation du mélange des composants.

Au repos, c'est-à-dire avant application d'une contrainte mécanique, la composition de la base et la composition du durcisseur sont maintenues dans deux enveloppes, sans contact possible entre le composant contenu dans une enveloppe et le composant contenu dans une autre enveloppe. Autrement dit, au repos, les composants ne sont pas réticulés. C'est sous l'action d'une contrainte mécanique que les opercules des enveloppes se rompent, ce qui provoque la mise en contact des composants ; la composition de la base et la composition du durcisseur se mélangent. Le mélange des deux composants provoque la réticulation de la résine.

De préférence, la réticulation du mélange des composants contenus dans les enveloppes aboutit à une résine choisie parmi les polyépoxydes, les polyesters vinyliques, les polyacryliques, les polyacrylates, de préférence à une résine choisie parmi les polyépoxydes et les polyesters vinyliques.

A titre d'exemple, la résine époxy peut être obtenue à partir d'une composition de base comprenant des monomères époxydes de type diglycidyle éther de bisphénol A et d'une composition de durcisseur comprenant des phénols ou des anhydrides d'acide ou d'amine. La résine polyester vinylique peut être obtenue à partir d'une composition de base comprenant des polyesters insaturés et d'une composition de durcisseur comprenant des monomères vinyliques, tels que de monomères styréniques.

Selon un mode de réalisation, un des deux composants contenu dans une enveloppe se présente sous la forme d'une poudre. Dans ce cas, le composant contenu dans l'autre enveloppe se présente sous la forme d'un liquide.

De préférence, dans le cas où un des composants est une composition de base et l'autre composant est une composition de durcisseur, la composition de base est sous la forme d'une poudre, la composition de durcisseur étant alors sous forme liquide.

Le mélange des composants se réalise par les propriétés de migration naturelle. Par conséquent, le mélange des composants peut se faire sans agitation mécanique.

Afin d'accélérer le mélange, un des deux composants peut se présenter sous forme de poudre afin d'ajouter à la migration une propriété de capillarité.

La réticulation du mélange des composants peut durer de 10 minutes à 10 heures, de préférence de 20 minutes à 5 heures, de préférence encore de 30 minutes à 2 heures.

Le joint selon l'invention peut se présenter soit sous une forme dans laquelle les enveloppes sont séparées, soit sous une forme dans laquelle les enveloppes sont fixées les unes aux autres, soit sous une forme intermédiaire où les enveloppes sont en partie fixées les unes aux autres.

Selon un mode de réalisation, les enveloppes sont fixées les unes aux autres, par exemple par soudure.

La soudure est de préférence effectuée au niveau de la membrane de chaque enveloppe. En effet, l'opercule de chaque enveloppe doit de préférence restée « libre », sans soudure, pour pouvoir se rompre et permettre la mise en contact des composants.

De préférence, la soudure est effectuée par vulcanisation, par ultra-son ou par collage.

De préférence, la soudure est effectuée de telle manière que sous l'action d'une contrainte mécanique, les opercules se rompent pour permettre la mise en contact des composants contenus dans les enveloppes. De préférence, les composants sont maintenus dans les enveloppes après l'action de la contrainte mécanique. De préférence, il n'y a pas de fuite de résine en dehors du joint. En effet, la résine obtenue après réticulation est de préférence maintenue dans le joint selon l'invention. Néanmoins, si au cours du temps, après une utilisation plus ou moins prolongée de la batterie, le joint s'use, par exemple s'il y a rupture de la membrane des enveloppes, il est possible que la résine soit en contact de l'objet à caler sans que cela ne soit préjudiciable à la qualité du calage.

Lorsque la contrainte mécanique est appliquée sur le joint, les enveloppes sont de préférence fixées les unes aux autres.

La contrainte mécanique peut se produire lors de l'assemblage des différents générateurs au sein d'une batterie. La contrainte mécanique peut être un écrasement, une compression ou une pression.

La contrainte mécanique provoque la rupture de l'opercule de chaque enveloppe.

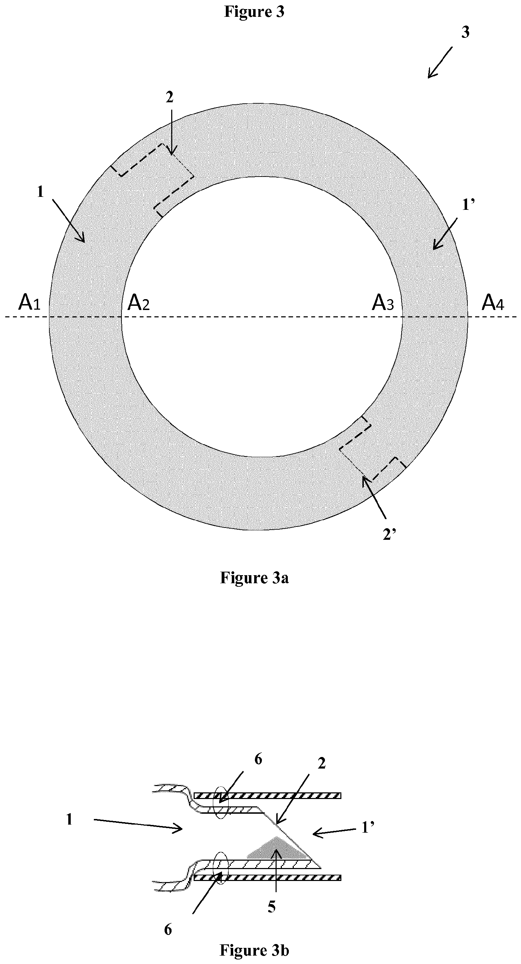

Selon un mode de réalisation, un moyen de rupture est présent au sein d'une ou plusieurs enveloppes du joint, de préférence à proximité immédiate de l'opercule. Le moyen de rupture permet alors de forcer la rupture de l'opercule lorsqu'une contrainte est appliquée sur l'enveloppe. La figure 3b schématise la présence du moyen de rupture 5 dans une enveloppe 1, par exemple à proximité immédiate d'un opercule 2.

Le joint selon la présente invention peut se trouver sous différentes formes.

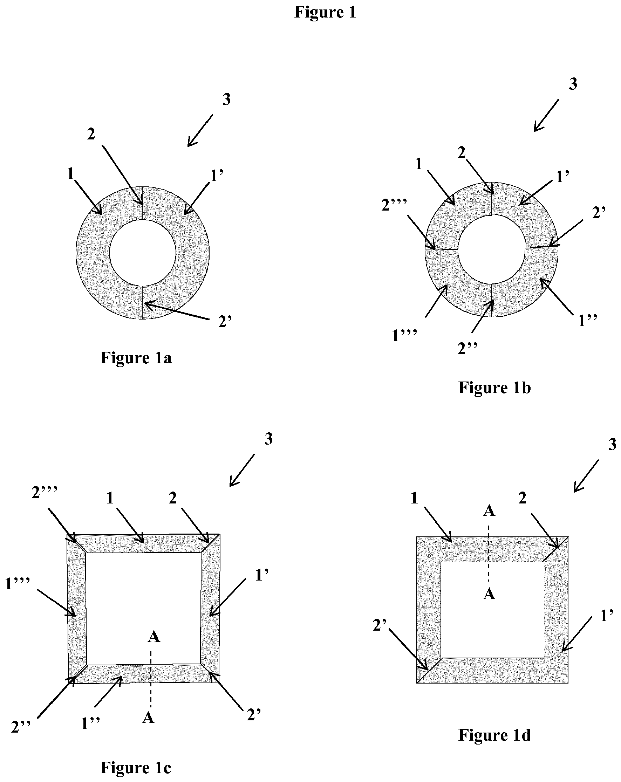

Selon un mode de réalisation, le joint selon l'invention se présente sous la forme d'un anneau (cercle) présentant une certaine épaisseur (voir par exemple les figures 1a, 1b, 3, 4 et 5). Chaque enveloppe se présente alors sous la forme d'une portion d'anneau. L'épaisseur peut varier selon les applications et l'utilisation du joint.

Dans le cas où le joint est constitué de deux enveloppes, chaque enveloppe se présentera de préférence sous la forme d'un demi-anneau présentant une certaine épaisseur.

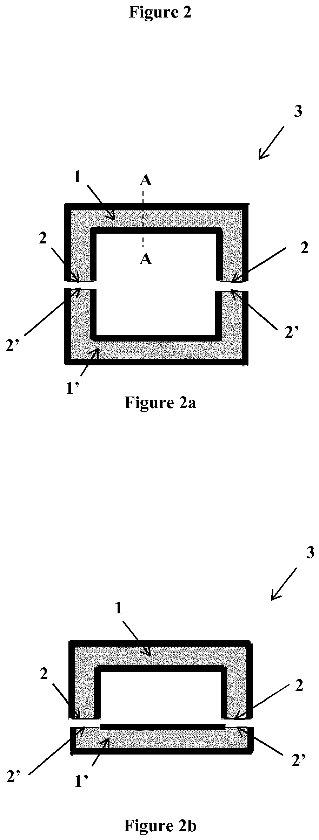

On peut également imaginer un joint ayant un profil carré (voir par exemple les figures 1c, 1d, 2a et 2b commentées ci-dessous). Dans ce cas, le joint pourra alors avoir la forme d'un parallélépipède. Dans ce cas, le joint selon l'invention est scindé en deux portions ou plus pour former les enveloppes.

Dans le cas où le joint est constitué de deux enveloppes, chaque enveloppe se présentera de préférence sous la forme d'un cylindre coudé, présentant un ou deux coudes (Voir par exemple les figures 1d et 2a respectivement où selon la coupe AA, on obtient une forme de cercle).

Dans le cas où le joint est constitué de quatre enveloppes, chaque enveloppe se présentera de préférence sous la forme d'un cylindre droit ayant des extrémités biseautés, les quatre enveloppes formant alors un carré ou un rectangle (Voir par exemple la figure 1c où selon la coupe AA, on obtient une forme de cercle).

Selon le mode de réalisation dans lequel le joint est constitué de 4 enveloppes, de préférence, 2 enveloppes contiendront la composition de base et 2 enveloppes contiendront la composition de durcisseur. Selon ce mode de réalisation, on aura de préférence une alternance entre une composition de base et une composition de durcisseur, les compositions de base et de durcisseur étant séparées par des opercules fragiles. Ainsi, la mise en contact et donc le mélange de la composition de base et de la composition de durcisseur sont facilités puisque chaque composition de base, respectivement de durcisseur, aura une distance à parcourir plus courte pour se mélanger avec la composition de durcisseur, respectivement de base.

Selon un mode de réalisation, le joint selon l'invention présente un espace vide entre les enveloppes.

L'espace vide pourra alors servir à accueillir l'objet à caler. Dans le cas où l'objet à caler aura une forme cylindrique, l'espace vide aura de préférence la forme d'un disque. Dans le cas où l'objet à caler aura une forme parallélépipédique, l'espace vide aura de préférence la forme d'un carré ou d'un rectangle.

Comme expliqué ci-dessus, le joint selon la présente invention peut se présenter sous différentes formes. En particulier, les enveloppes peuvent avoir différentes formes. Les figures sont destinées à donner quelques exemples non limitatifs de formes possibles pour les enveloppes des joints selon l'invention.

La figure 1 représente des coupes transversales de joints selon la présente invention.

Les figures 1a et 1b représentent un joint 3 de profil annulaire et les figures 1c et 1d représentent un joint 3 de profil carré.

Les joints des figures 1a, 1b, 1c et 1d présentent un espace vide entre les enveloppes.

Les figures 1a et 1d représentent un joint 3 constitué de deux enveloppes 1 et 1'. Selon le mode de réalisation de la figure 1a, les deux enveloppes 1 et 1' ont une forme de demi-anneau. Selon le mode de réalisation de la figure 1d, les deux enveloppes 1 et 1' ont une forme de demi-rectangle présentant chacun un coude.

Selon le mode de réalisation de la figure la et de la figure 1d, les deux enveloppes 1 et 1' sont séparées par deux opercules « plan » 2 et 2'.

Chaque enveloppe 1 et 1' comprend un composant et lorsqu'il y a rupture des opercules, les composants sont mis en contact, se mélangent et réticulent pour donner une résine réticulée.

Les figures 1b et 1c représentent un joint 3 constitué de quatre enveloppes 1, 1', 1" et 1"'. Selon le mode de réalisation illustré sur la figure 1b, les quatre enveloppes 1, 1', 1" et 1"' ont une forme de quart d'anneau. Selon le mode de réalisation illustré sur la figure 1c, les quatre enveloppes ont une forme de quart de rectangle.

Selon le mode de réalisation de la figure 1b et de la figure 1c, les quatre enveloppes sont séparées par quatre opercules « plan » 2, 2', 2" et 2'".

Chaque enveloppe 1, 1', 1" et 1'" comprend un composant et lorsqu'il y a rupture des opercules, les composants sont mis en contact, se mélangent et réticulent pour donner une résine réticulée.

De préférence, les composants des enveloppes 1 et 1" sont identiques et les composants des enveloppes 1' et 1'" sont identiques. En effet, cela permet que le composant de l'enveloppe 1 puisse réagir avec le composant présent dans les enveloppes 1' et 1'" pour réticuler. De la même manière, le composant de l'enveloppe 1" pourra alors réagir avec le composant présent dans les enveloppes 1' et 1'" pour réticuler. Ainsi, selon ce mode de réalisation, le temps de réticulation sera réduit dans la mesure où les composants auront moins de distance à parcourir pour se mélanger et réticuler.

La figure 2 représente d'autres modes de réalisation de joints selon l'invention. Comme pour la figure 1, la figure 2 représente les coupes transversales.

Sur la figure 2, les traits plus épais représentent la membrane (solide) des enveloppes et les traits plus fins représentent l'opercule (fragile) 2 et 2' des enveloppes.

Selon le mode de réalisation de la figure 2a, le joint 3 comprend 2 enveloppes 1 et 1', chaque enveloppe ayant la forme d'un demi-rectangle comprenant chacun deux coudes.

De préférence, les enveloppes ont la même forme. En particulier, lorsque l'enveloppe comprend un nombre pair d'enveloppes, il est préférable que toutes les enveloppes aient la même forme.

Néanmoins, il est possible d'envisager un joint comprenant au moins deux enveloppes de formes différentes, comme illustré sur la figure 2b.

Selon le mode de réalisation de la figure 2b, le joint 3 comprend 2 enveloppes 1 et 1', l'enveloppe 1 ayant la forme d'un U, et l'enveloppe 1' ayant la forme d'une portion rectiligne de rectangle, apte à fermer le U lorsque les enveloppes seront soudées.

Avant utilisation comme moyen de calage, les enveloppes sont de préférence fixées les unes aux autres, par exemple par soudure. Les enveloppes sont soudées de telle manière que lorsqu'une contrainte mécanique est appliquée, la rupture des opercules des enveloppes permet la mise en contact des composants contenus dans chaque enveloppe, les composants étant maintenus dans la structure des enveloppes après ouverture des opercules pour assurer une réticulation adéquate, sans perte de composant.

Selon un mode de réalisation de l'invention, chaque enveloppe comprend une extrémité présentant une partie mâle et une extrémité présentant une partie femelle, la partie mâle de l'extrémité d'une enveloppe s'insérant dans la partie femelle de l'extrémité d'une autre enveloppe. La figure 3 illustre ce mode de réalisation dans lequel le joint 3 est constitué de deux enveloppes et les enveloppes sont de forme annulaire.

Sur la figure 3a (coupe transversale), les deux enveloppes 1 et 1' sont soudées l'une à l'autre de sorte que les composants sont maintenus à l'intérieur des enveloppes, même après rupture des opercules 2 et 2'.

Sur la figure 3b est représentée une vue en coupe de la jonction comprenant l'opercule 2 de la figure 3a. Sur la figure 3b, l'extrémité de l'enveloppe 1 présente une partie mâle qui s'insère dans la partie femelle de l'extrémité de l'enveloppe 1'.

Selon le mode de réalisation illustré sur le schéma de la figure 3, les enveloppes 1 et 1' sont d'abord fermées à une extrémité par la mise en place d'un opercule 2 et 2', puis elles sont chacune remplies par un composant avant d'être assemblées l'une à l'autre pour former le joint selon l'invention.

Selon ce mode de réalisation, les enveloppes peuvent également être fixées les unes aux autres par soudure.

Sur la figure 3b, les cercles 6 représentent les portions des enveloppes 1 et 1' qui peuvent être soudées pour fixer les enveloppes 1 et 1'.

De préférence, l'extrémité de la partie mâle est obturée par l'opercule et la partie mâle comprend un moyen de rupture de l'opercule.

La figure 3b illustre ce mode de réalisation où le moyen de rupture est représenté par un aileron 5.

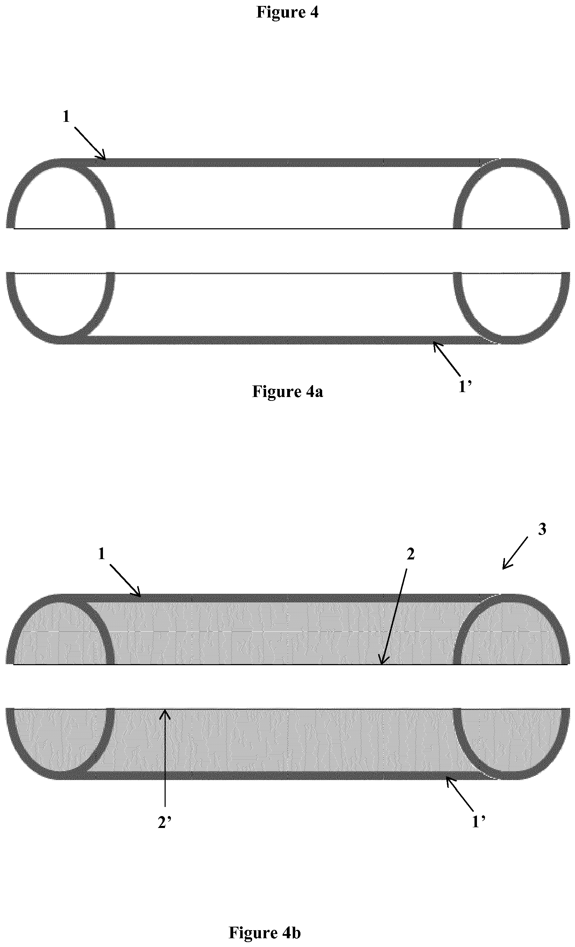

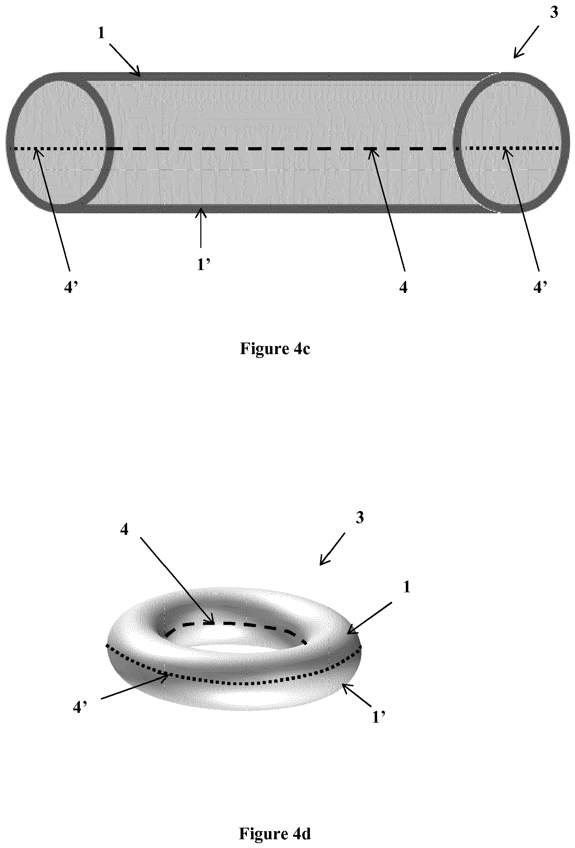

La figure 4 représente un joint selon un autre mode de réalisation de l'invention. Selon le mode de réalisation illustré sur la figure 4, le joint 3 comprend deux enveloppes 1 et 1' ayant chacune la forme d'un demi-anneau scindé par sa génératrice. La figure 4d représente une vue en perspective du joint 3, une fois que les deux enveloppes 1 et 1' ont été fixées l'une à l'autre, par exemple par une soudure représentée par les lignes 4 et 4'.

Sur les figures 4a, 4b et 4c, pour faciliter la compréhension, le joint tel que représenté à la figure 4d a été fictivement « coupé » et mis à plat. Sur les figures 4a, 4b et 4c, la membrane des enveloppes 1 et 1' a été représentée avec une certaine épaisseur.

La figure 4a représente les enveloppes 1 et 1' avant remplissage avec chaque composant. La figure 4b représente les enveloppes 1 et 1' comprenant chacune un composant, le mélange des composants étant apte à réticuler. Après remplissage des enveloppes 1 et 1', chacune des deux enveloppes est fermée avec un opercule 2 et 2' respectivement. Sur la figure 4c, les deux enveloppes sont fixées l'une à l'autre, par soudure par exemple. La jonction de soudure est effectuée par exemple au niveau de la membrane, le long du demi-anneau, par exemple par une ligne de soudure 4 au niveau du diamètre interne du demi-anneau et une ligne de soudure 4' au niveau du diamètre externe du demi-anneau. Les lignes de soudure 4 et 4' ont également été représentées sur la figure 4d. Ainsi, lorsque le joint 3 représenté sur la figure 4c subit une contrainte mécanique, par exemple un écrasement, les opercules 2 et 2' se rompent et les composants des enveloppes 1 et 1' sont mis en contact, se mélangent par migration et éventuellement par capillarité pour réticuler et obtenir une résine réticulée. Grâce à la soudure, les enveloppes 1 et 1' restent fixées l'une à l'autre au niveau de la membrane de l'enveloppe, même après écrasement du joint.

Il est également décrit un procédé de fabrication du joint selon l'invention, ledit procédé comprenant les étapes suivantes :
a) la fourniture d'au moins deux enveloppes déformables,
b) le remplissage de chaque enveloppe avec un composant,
c) la mise en place d'au moins un opercule sur chaque enveloppe,
l'ordre des étapes b) et c) pouvant être inversé.

Comme indiqué précédemment, les enveloppes déformables peuvent avoir différentes formes. Le volume de chaque enveloppe est adapté à l'utilisation du joint.

De préférence, le remplissage est effectué au travers d'une ouverture de l'enveloppe, cette ouverture pouvant ensuite être fermée par un opercule.

Le remplissage de chaque enveloppe peut être effectué avant ou après la mise en place d'un opercule sur chaque enveloppe. La mise en place d'au moins un opercule sur une enveloppe peut correspondre à la fermeture d'une extrémité d'une enveloppe avant remplissage de l'enveloppe par une autre extrémité. A titre d'exemple, la figure 4 illustre un mode de réalisation où le remplissage s'effectue avant la mise en place d'au moins un opercule, ladite mise en place fermant l'enveloppe et empechant alors le composant de fuir de l'enveloppe. Au contraire, la figure 3 illustre un mode de réalisation où le remplissage s'effectue après la mise en place d'un opercule sur une extrémité de l'enveloppe, l'autre extrémité de l'enveloppe restant ouverte pour permettre le remplissage de l'enveloppe avec un composant.

De préférence, le composant occupe au moins 50% du volume de l'enveloppe, de préférence au moins 75% du volume de l'enveloppe, de préférence au moins 90% du volume de l'enveloppe, de préférence encore le composant occupe la totalité du volume de l'enveloppe.

Selon un mode de réalisation, la mise en place d'au moins un opercule sur chaque enveloppe s'effectue par scellage à chaud au moyen d'un film.

Selon un mode de réalisation, le procédé de fabrication du joint comprend en outre une étape de soudure des enveloppes les unes aux autres, de sorte qu'une rupture de l'opercule provoque la mise en contact du composant contenu dans une enveloppe avec le composant contenu dans une autre enveloppe. La soudure est de préférence effectuée au niveau de la membrane des enveloppes. De préférence, la soudure est effectuée par vulcanisation, par ultra-son ou par collage.

Après soudure des enveloppes, les enveloppes sont disposées de telle sorte que la rupture de l'opercule provoque la mise en contact du composant contenu dans une enveloppe avec le composant contenu dans une autre enveloppe pour obtenir la réticulation du mélange des composants.

Selon un mode de réalisation du procédé de fabrication, un moyen de rupture est mis en place dans au moins une des enveloppes du joint, de préférence à proximité d'un opercule. De préférence, le moyen de rupture est mis en place avant le remplissage de l'enveloppe et avant la mise en place d'un opercule sur l'enveloppe.

Il est également décrit un moyen de calage obtenu après réticulation des composants contenus dans le joint selon l'invention.

Les composants, de préférence la composition de la base et la composition du durcisseur, sont mis en contact et donc réticulent, lors de l'application d'une contrainte mécanique. Une résine est obtenue après réticulation du mélange des composants.

Le moyen de calage désigne le joint dans lequel le mélange des composants a réticulé, autrement dit, le moyen de calage désigne le joint rigidifié.

Lors de la réticulation, la résine se durcit. A l'issue de la réticulation, le joint est déformé et rigide. Ainsi, après assemblage des générateurs d'une batterie, le moyen de calage (ou joint déformé rigide) permet de caler un générateur électrochimique au sein d'une batterie.

Le moyen de calage selon l'invention présente de nombreux avantages, notamment celui de s'adapter à différents designs (ou formats) de générateurs électrochimiques et celui d'être robuste et de résister aux fluctuations thermiques.

L'invention concerne également l'utilisation du joint selon l'invention pour caler un générateur électrochimique dans le coffre de groupement d'une batterie. Le joint selon l'invention est placé au fond du coffre de groupement de la batterie ou bien sur un élément de support mécanique lui-même posé au fond du coffre de groupement, et le générateur électrochimique est placé sur le joint.

Le poids du générateur électrochimique provoque l'écrasement du joint. La pression provoquant l'écrasement du joint peut aussi être exercée par un dispositif en complément du poids du générateur électrochimique, par exemple par mise en place du couvercle du coffre de groupement de la batterie. Sous l'effet de cette contrainte mécanique, les opercules séparant les composants contenus dans les enveloppes se rompent au sein du joint, ce qui provoque la mise en contact des composants et donc la réticulation du mélange des composants. A l'issue de la réticulation, la résine est dure, ce qui permet au moyen de calage (joint selon l'invention après réticulation) d'assurer son rôle.

Le joint selon l'invention est utilisé en tant que moyen pour caler mais n'agit pas en tant que moyen pour coller. En effet, la résine, après durcissement, est maintenue dans les enveloppes constituant le joint. Néanmoins, à l'usure, après un certain temps d'utilisation de la batterie, il est possible que la membrane des enveloppes se rompe sans que cela nuise à la qualité du calage. En cas de rupture de la membrane, la résine sera alors en contact direct avec le générateur électrochimique à caler.

Chaque générateur comprend un conteneur contenant :
a) un faisceau électrochimique, c'est-à-dire l'ensemble constitué par l'alternance d'électrodes positives et négatives séparées par un séparateur ;
b) un électrolyte liquide.

Le conteneur est de préférence de forme cylindrique mais d'autres formats peuvent être envisagés tels que le format parallélépipédique (prismatique). Le conteneur présente une paroi à l'une de ses extrémités reposant sur une surface d'appui. Le conteneur du générateur électrochimique est obturé à l'extrémité opposée par un couvercle supportant les bornes de sortie de courant. L'une des deux bornes peut être fixée sur la paroi externe du couvercle et connectée électriquement à la paroi cylindrique du conteneur. L'autre borne peut être fixée à travers le couvercle et isolée électriquement du couvercle par un joint en matière plastique.

La surface d'appui est le fond du coffre de groupement de la batterie ou un élément de support mécanique tel qu'un flasque, ledit élément de support mécanique étant lui-même posé sur le fond du coffre de groupement de la batterie. L'élément de support mécanique permet d'éviter que le générateur électrochimique soit en contact direct avec le fond du coffre de groupement de la batterie. L'élément de support permet notamment d'isoler électriquement le générateur électrochimique. L'élément de support peut par exemple être un flasque.

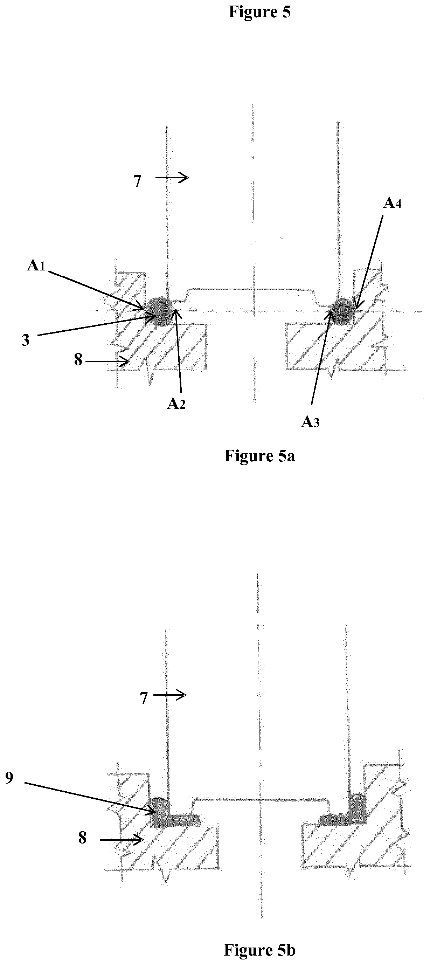

La figure 5 illustre l'utilisation d'un joint selon l'invention, utilisation d'un joint tel qu'illustré à la figure 3 ou à la figure 4. Il s'agit d'une vue en coupe longitudinale, selon la génératrice du générateur électrochimique de forme cylindrique dans le cas de la figure 5. Sur le mode de réalisation de la figure 5, le joint est en forme d'anneau. Le joint selon l'invention présente alors un espace vide au milieu de l'anneau. Le générateur électrochimique 7 est posé sur l'anneau, l'espace vide au centre de l'anneau ayant une dimension sensiblement identique au diamètre du conteneur (de forme cylindrique). Le conteneur du générateur présente un fond qui repose sur le joint. Lors de l'assemblage, le joint selon l'invention subit une contrainte mécanique. La figure 5a illustre l'état au repos, c'est-à-dire avant application d'une contrainte mécanique, le joint 3 est posé sur une surface d'appui 8, telle qu'un élément de support mécanique, par exemple un flasque, lui-même posé au fond du coffre de groupement d'une batterie, le générateur électrochimique 7 est posé sur le joint 3. L'axe A1A2A3A4 tel que défini sur la figure 4a a été reporté sur la figure 5a pour faciliter la lecture de la figure 5a. Sur la figure 5, la surface d'appui 8 schématise par exemple un élément de support mécanique et la paroi latérale du coffre de groupement. Comme expliqué précédemment, l'action de la contrainte mécanique provoque le mélange des composants contenus dans chaque enveloppe qui conduit à l'expansion de la résine. Comme illustré sur la figure 5b, après durcissement de la résine, le joint est déformé car la résine s'est répandue dans les espaces disponibles et un moyen de calage 9 est obtenu. Le moyen de calage comble les espaces vides et assure le calage du générateur électrochimique dans le coffre de groupement d'une batterie. La forme du joint selon l'invention garantit un calage rigide du conteneur du générateur sur la totalité de sa périphérie, ainsi que sur la périphérie de sa surface d'appui sur le fond du conteneur et donc orthogonale à l'axe vertical décrit en fig5.

De par sa forme et sa position sur le conteneur, l'invention assure un calage/blocage de l'élément vis-à-vis du coffre systématiquement axial et radial, quelle que soit la forme de l'élément cylindrique ou prismatique.

De plus, la forme évidée du joint permet de dégager un espace pour un éventuel système de sécurité de l'élément électrochimique situé sur le fond du conteneur. L'espace correspondant à l'évidement du joint permet de recevoir des gaz provenant du conteneur du générateur en cas de déclenchement du système de sécurité.

L'invention concerne également un procédé d'assemblage d'une batterie comprenant au moins un générateur électrochimique, ledit procédé comprenant les étapes suivantes :
- mise à disposition d'un coffre de groupement comprenant une surface d'appui,
- mise en place d'au moins un joint selon l'invention dans le coffre de groupement au contact de la surface d'appui, ledit joint (3) comprenant au moins deux enveloppes déformables (1, 1'), chaque enveloppe contenant un composant et comprenant un opercule (2, 2', 2", 2"'), la mise en contact du composant contenu dans une enveloppe (1) avec le composant contenu dans une autre enveloppe (1') provoquant une réticulation du mélange des deux composants ;
- mise en place d'au moins un générateur électrochimique comprenant un conteneur comportant un fond, le fond du conteneur étant en contact avec le joint,
- rupture des opercules et mise en contact des composants contenus dans les enveloppes du joint sous l'action de la contrainte mécanique exercée par le générateur électrochimique,
- rigidification du joint.

La surface d'appui est le fond du coffre de groupement de la batterie ou un élément de support mécanique tel qu'un flasque, ledit élément de support mécanique étant lui-même posé sur le fond du coffre de groupement de la batterie. L'élément de support mécanique permet d'éviter que le générateur électrochimique soit en contact direct avec le fond du coffre de groupement de la batterie. L'élément de support permet notamment d'isoler électriquement le générateur électrochimique. L'élément de support peut par exemple être un flasque.

Selon un mode de réalisation du procédé d'assemblage, le joint a une forme adaptée à la forme du générateur. En particulier, le joint peut présenter un espace vide entre les enveloppes, ledit espace vide présentant alors la même forme que la forme du générateur. Dans ce cas, le joint sera présent tout autour du générateur électrochimique.

Selon un mode de réalisation, le procédé d'assemblage comprend les étapes suivantes :
- la mise à disposition d'un coffre de groupement comprenant un fond,
- la mise en place d'au moins un joint selon l'invention dans le coffre de groupement,
- la mise en place d'au moins un générateur électrochimique en contact avec le joint,
- la rupture des opercules et la mise en contact des composants contenus dans les enveloppes du joint sous l'action de la contrainte mécanique exercée par le générateur électrochimique,
- la rigidification du joint.

Selon un mode de réalisation, le procédé d'assemblage comprend les étapes suivantes :
- la mise à disposition d'un coffre de groupement comprenant un fond,
- la mise en place d'au moins un élément de support mécanique au fond du coffre de groupement,
- la mise en place d'au moins un joint selon l'invention sur l'élément de support,
- la mise en place d'au moins un générateur électrochimique en contact avec le joint,
- la rupture des opercules et la mise en contact des composants contenus dans les enveloppes du joint sous l'action de la contrainte mécanique exercée par le générateur électrochimique,
- la rigidification du joint.

Un autre objet de la présente invention concerne une batterie comprenant au moins un générateur électrochimique et au moins un moyen de calage selon l'invention. Le moyen de calage selon l'invention correspond au joint selon l'invention après réticulation. En effet, lorsque la batterie est assemblée, le joint a subi une contrainte mécanique de telle sorte que le mélange des composants contenus dans les enveloppes du joint a réticulé. Autrement dit, à l'issue de la réticulation, le joint s'est rigidifié pour conduire au moyen de calage.

De préférence, la batterie comprend un joint selon l'invention par générateur électrochimique. Autrement dit, chaque générateur électrochimique contenu dans la batterie est de préférence calé à l'aide d'un joint selon l'invention.

Selon un mode de réalisation, un élément de support mécanique, tel qu'un flasque, est posé sur le fond du coffre de groupement de la batterie ; la présence de l'élément de support mécanique évite le contact direct entre le fond du coffre de groupement de la batterie et le conteneur du ou des générateurs électrochimiques.

Selon un mode de réalisation, le générateur électrochimique utilisé dans la batterie selon l'invention est un générateur au lithium.

Il est également décrit un procédé d'assemblage d'une batterie comprenant au moins un générateur électrochimique, ledit procédé comprenant les étapes :
- la mise à disposition d'un coffre de groupement comprenant un fond,
- la mise en place dans le coffre de groupement d'au moins un joint apte à se rigidifier,
- la mise en place d'au moins un générateur électrochimique en contact avec le joint,
- la rigidification du joint sous l'action de la contrainte mécanique exercée par le générateur électrochimique.

Il est possible d'envisager l'utilisation d'un joint apte à se rigidifier pour caler un générateur électrochimique dans le coffre de groupement d'une batterie. Il est en effet envisageable d'obtenir un effet de rigidification du joint sans avoir recours à l'utilisation de deux composants, tels que composition de base et composition de durcisseur, dont le mélange réticule.

Tout comme le joint selon l'invention, le joint apte à se rigidifier utilisé dans ce procédé d'assemblage d'une batterie présente une structure souple au repos, avant application d'une contrainte mécanique. La structure souple permet de combler les espaces vides. Puis, après application d'une contrainte mécanique, le joint se rigidifie pour permettre d'obtenir un calage qui soit de bonne qualité, en particulier qui soit robuste.

Un des avantages de l'invention est qu'elle permet un démontage des générateurs électrochimiques du coffre ultérieurement si besoin. En effet, même si au cours du temps l'enveloppe du joint se rompt, il n'y aura pas d'adhésion possible entre le conteneur du générateur électrochimique et le joint en raison du fait que la résine a préalablement réticulé. Cela permet d'assurer que les générateurs pourront être aisément retirés du coffre.

Il est également décrit un procédé d'assemblage comprenant :
- la mise à disposition d'un coffre de groupement comprenant un fond,
- la mise en place d'au moins un élément de support au fond du coffre de groupement,
- la mise en place sur l'élément de support d'au moins un joint apte à se rigidifier,
- la mise en place d'au moins un générateur électrochimique en contact avec le joint,
- la rigidification du joint sous l'action de la contrainte mécanique exercée par le générateur électrochimique.

### EXEMPLES

Les joints testés sont des joints de forme annulaire telle que représentée à la figure 3. Le procédé de fabrication du joint selon l'invention est le suivant :
- fabrication de deux enveloppes ayant une membrane en caoutchouc synthétique présentant une épaisseur de 0,50 mm, par injection dans un moule ; chacune des deux enveloppes a une forme de demi-anneau telle que représentée à la figure 3a,
- Pose d'un opercule en caoutchouc synthétique présentant une épaisseur de 0,10 mm, sur une extremité de chaque enveloppe,
- Scellage de l'opercule par induction,
- Remplissage d'une enveloppe avec une composition de base comprenant des monomères époxydes de type diglycidyl éther de bisphenol A et remplissage de l'autre enveloppe avec une composition de durcisseur comprenant des phénoles ; la composition de base et la composition de durcisseur sont telles que la composition de base représente 78% massique (soit une masse de 2,34 grammes de composition de base) et la composition de durcisseur représente 22% massique (soit une masse de 0,66 grammes de composition de durcisseur), les pourcentages étant exprimés par rapport à la somme des masses des deux compositions,
- Assemblage des deux enveloppes par emboitement tel qu'illustré à la figure 3b suivi d'une vulcanisation au niveau de la membrane de chaque enveloppe.

La Demanderesse a mesuré la masse de résine injectée et la masse de joints nécessaires pour assurer le calage des générateurs au sein de trois types de batteries. Les valeurs sont indiquées dans le tableau 1 ci-dessous.

**Tableau 1 : mesure de la masse de résine injectée et de la masse de joints**

| | **Comparatif :** Masse Résine injectée (g) | **Selon l'invention :** Masse de joints (g) | Réduction de masse (%) |
|---|---|---|---|
| Batterie A | 1300 | 42 | 3136 |
| Batterie B | 330 | 21 | 1592 |
| Batterie C | 610 | 42 | 1472 |

La résine injectée est une mousse (résine expansive) époxy comprenant des charges ignifugeantes. La résine est comprise dans tout le volume du coffre, le long des générateurs électrochimiques.

La batterie A comprend un coffre parallélépipédique de dimensions 280 x 290 x 270 mm (Longueur x largeur x hauteur) et 14 générateurs électrochimiques. Chaque générateur électrochimique est de forme cylindrique et présente un diamètre de 54 mm et une hauteur de 222 mm. Le volume libre destiné à recevoir la résine est de 5 litres, le volume occupé par les générateurs électrochimiques est de 7,11 litres. Un joint selon l'invention par générateur sera nécessaire pour assurer un calage satisfaisant. La batterie A comprend donc 14 joints selon l'invention.

La batterie B comprend un coffre cylindrique de dimensions 294 mm de hauteur pour un diamètre de 179 mm. La batterie B comprend 7 générateurs électrochimiques. Chaque générateur électrochimique est de forme cylindrique et présente un diamètre de 54 mm et une hauteur de 222 mm. Le volume libre destiné à recevoir la résine est de 1,22 litres, le volume occupé par les générateurs électrochimiques est de 3,55 litres. Un joint selon l'invention par générateur sera nécessaire pour assurer un calage satisfaisant. La batterie A comprend donc 7 joints selon l'invention.

La batterie C comprend un coffre parallélépipédique de dimensions 445 x 126 x 292 mm (Longueur x largeur x hauteur) et 14 générateurs électrochimiques. Chaque générateur électrochimique est de forme cylindrique et présente un diamètre de 54 mm et une hauteur de 222 mm. Le volume libre destiné à recevoir la résine est de 1,5 litres, le volume occupé par les générateurs électrochimiques est de 7,11 litres. Un joint selon l'invention par générateur sera nécessaire pour assurer un calage satisfaisant. La batterie A comprend donc 14 joints selon l'invention.

En comparant les masses, on s'aperçoit que l'utilisation d'un joint selon l'invention pour le calage de générateurs électrochimiques permet de diminuer considérablement la masse de la batterie finale obtenue.

La Demanderesse a également comparé deux méthodes de calage de l'art antérieur (calage par matrice mousse et calage par anneau plat en élastomère) avec la méthode de calage selon la présente invention avec le joint selon l'invention (voir tableau 2).

La mousse est une mousse époxy ignifugée telle qu'utilisée ci-dessus pour les batteries A, B et C.

Le joint selon l'invention utilisé pour les tests du tableau 2 comprend une enveloppe en silicone.

L'anneau en élastomère est un anneau plat en silicone (silicone 40-60 Shore).

Afin d'accélérer les cycles de solicitations environnementales, les batteries comprenant un type de calage différent ont été soumises à la norme RTCA DO-160G ou ISO 13628-6.

Différentes propriétés ont été mesurées :
i) Maintien mécanique, correspond à la capacité d'un produit, de par son assemblage à supporter des sollicitations mécaniques sans dégradation de ses performances, il est évalué en comparant les fréquences propres du système avec les fréquences de solicitations mécaniques ; un bon maintien mécanique correspond par exemple à une fréquence propre du système de 500 Hz pour une fréquence de solicitation mécanique allant de 0 à 200 Hz ;
ii) Cyclage thermique, consiste en une variation de température plus ou moins importante et à une fréquence donnée sur une durée donnée, selon les requis de l'application et ce afin de reproduire en laboratoire les variations de température que subira le produit dans son environnement opérationnel ;
iii) Vieillissement : un produit soumis aux agressions environnementales comme le cyclage thermique, les sollicitations mécaniques, l'exposition aux UV, l'atmosphère saline, la présence d'eau, qui accélèrent la dégradation des performances des matériaux constituant le produit et donc des performances intrinsèques au produit.

**Tableau 2 : évaluation des propriétés obtenues pour différentes solutions de calage**

| | Calage par matrice mousse | Calage par anneau plat en élastomère | Calage selon l'invention |
|---|---|---|---|
| Maintien mécanique | ++ | - | ++ |
| Cyclage thermique | - | + | + |
| Vieillissement | + | + | ++ |
| Gain de poids | - | + | + |

Le tableau 2 ci-dessus rassemble les résultats qui ont été obtenus pour chaque propriété en utilisant une même batterie mais différentes solutions de calage. Le gain de poids a également été évalué pour les trois solutions de calage.

Le signe « - » correspond à la performance la moins bonne et le signe « ++ » correspond à la meilleur performance. Le signe « + » correspond à une performance intermédiaire.

Le tableau 2 indique que le calage par matrice mousse donne un maintien mécanique équivalent à celui du calage selon l'invention mais un moins bon cyclage thermique que le calage selon l'invention.

Le tableau 2 indique que le calage par un anneau en élastomère donne un cyclage thermique équivalent à celui du calage selon l'invention mais le calage selon l'invention présente un meilleur maintien mécanique que le calage par un anneau en élastomère.

En effet, la rigidification du joint selon l'invention permet d'améliorer significativement les propriétés de maintien mécanique par rapport à un anneau en élastomère qui restera souple.

Le joint selon l'invention base son efficacité uniquement sur un calage et non pas sur un collage. En effet, le collage est davantage sujet aux variations de température que le calage. En effet, la différence de coefficient de dilatation entre une mousse et les pièces mécaniques à caler génère un phénomène de cisaillement qui fatigue l'interface de collage et tend à séparer la mousse de la pièce mécanique.

## Revendications

1. Batterie comprenant au moins un générateur électrochimique (7) et au moins un moyen de calage (9) dudit générateur dans la batterie, le moyen de calage (9) étant obtenu après réticulation des composants d'un joint (3), ledit joint (3) comprenant au moins deux enveloppes déformables (1, 1') chaque enveloppe contenant un composant et comprenant un opercule (2, 2', 2", 2"'), la mise en contact du composant contenu dans une enveloppe (1) avec le composant contenu dans une autre enveloppe (1') provoquant une réticulation du mélange des deux composants, ledit générateur électrochimique comprenant un conteneur comportant un fond, le fond du conteneur étant en contact avec le joint.

2. Batterie selon la revendication 1, dans laquelle le composant contenu dans une enveloppe est une composition de base et le composant contenu dans l'autre enveloppe est une composition de durcisseur, la composition de base et la composition de durcisseur étant les composants d'une colle bi-composant.

3. Batterie selon la revendication 1 ou 2, dans laquelle les enveloppes sont fixées les unes aux autres par soudure (4, 4'), de préférence par vulcanisation, par ultra-son ou par collage.

4. Batterie selon l'une des revendications 1 à 3, **caractérisée en ce que** la mise en contact des composants contenus dans chaque enveloppe s'effectue après rupture des opercules de chaque enveloppe.

5. Batterie selon l'une des revendications 1 à 4, dans laquelle sous l'action d'une contrainte mécanique, les opercules se rompent et les composants contenus dans chaque enveloppe sont mis en contact pour obtenir la réticulation.

6. Batterie selon l'une des revendications 1 à 5, dans laquelle la réticulation des composants aboutit à une résine choisie parmi les polyépoxydes, les polyesters vinyliques, les polyacryliques, les polyacrylates ou leurs mélanges.

7. Batterie selon l'une des revendications 1 à 6, dans laquelle le joint présente un espace vide entre lesdites enveloppes.

8. Batterie selon l'une des revendications 1 à 7, dans laquelle le joint présente la forme d'un anneau dans lequel chaque enveloppe représente une portion de l'anneau.

9. Batterie selon la revendication 8, dans laquelle le joint est constitué de deux enveloppes, chacune des deux enveloppes présentant la forme d'un demi-anneau.

10. Batterie selon l'une des revendications 1 à 9, dans laquelle chaque enveloppe comprend une extrémité présentant une partie mâle et une extrémité présentant une partie femelle, la partie mâle de l'extrémité de l'une des enveloppes s'insérant dans la partie femelle de l'extrémité d'une autre enveloppe.

11. Batterie selon la revendication 10, dans laquelle l'extrémité de la partie mâle est obturée par un opercule et la partie mâle comprend un moyen de rupture (5) de l'opercule.

12. Utilisation d'un joint pour caler au moins un générateur électrochimique (7) dans le coffre de groupement d'une batterie, ledit joint (3) comprenant au moins deux enveloppes déformables (1, 1'), chaque enveloppe contenant un composant et comprenant un opercule (2, 2', 2", 2'"), la mise en contact du composant contenu dans une enveloppe (1) avec le composant contenu dans une autre enveloppe (1') provoquant une réticulation du mélange des deux composants, ledit générateur électrochimique comprenant un conteneur comportant un fond, le fond du conteneur étant en contact avec le joint.

13. Procédé d'assemblage d'une batterie comprenant au moins un générateur électrochimique (7), ledit procédé comprenant les étapes suivantes :
- mise à disposition d'un coffre de groupement comprenant une surface d'appui (8),
- mise en place d'au moins un joint (3) dans le coffre de groupement au contact de la surface d'appui (8), ledit joint (3) comprenant au moins deux enveloppes déformables (1, 1'), chaque enveloppe contenant un composant et comprenant un opercule (2, 2', 2", 2"'), la mise en contact du composant contenu dans une enveloppe (1) avec le composant contenu dans une autre enveloppe (1') provoquant une réticulation du mélange des deux composants ;
- mise en place d'au moins un générateur électrochimique (7) comprenant un conteneur comportant un fond, le fond du conteneur étant en contact avec le joint,
- rupture des opercules (2, 2', 2", 2"') et mise en contact des composants contenus dans les enveloppes (1, 1') du joint (3) sous l'action de la contrainte mécanique exercée par le générateur électrochimique,
- rigidification du joint.

## Patentansprüche

1. Batterie, umfassend mindestens einen elektrochemischen Generator (7) und mindestens ein Mittel zum Verkeilen (9) des Generators in der Batterie, wobei das Mittel zum Verkeilen (9) nach Vernetzung der Komponenten einer Dichtung (3) erhalten wird, wobei die Dichtung (3) mindestens zwei verformbare Umhüllungen (1, 1') aufweist, wobei jede Umhüllung eine Komponente enthält und eine Kappe (2, 2', 2", 2''') aufweist, wobei das Inkontaktbringen der Komponente, die in einer Umhüllung (1) enthalten ist, mit der Komponente, die in einer anderen Umhüllung (1') enthalten ist, eine Vernetzung der Mischung der zwei Komponenten bewirkt, wobei der elektrochemische Generator einen Behälter aufweist, der einen Boden aufweist, wobei der Boden des Behälters mit der Dichtung in Kontakt steht.

2. Batterie nach Anspruch 1, wobei die Komponente, die in einer Umhüllung enthalten ist, eine Grundzusammensetzung ist und die Komponente, die in der anderen Umhüllung enthalten ist, eine Härterzusammensetzung ist, wobei die Grundzusammensetzung und die Härterzusammensetzung die Komponenten eines Zweikomponentenklebers sind.

3. Batterie nach dem Anspruch 1 oder 2, wobei die Umhüllungen durch Schweißen (4, 4'), vorzugsweise durch Vulkanisieren, durch Ultraschallschweißen oder durch Verkleben aneinander befestigt sind.

4. Batterie nach einem der Ansprüche 1 bis 3, **dadurch gekennzeichnet, dass** das Inkontaktbringen der Komponenten, die in jeder Umhüllung enthalten sind, nach dem Brechen der Kappen von jeder Umhüllung erfolgt.

5. Batterie nach einem der Ansprüche 1 bis 4, **dadurch gekennzeichnet, dass** die Kappen unter der Einwirkung einer mechanischen Beanspruchung gebrochen werden und die Komponenten, die in jeder Umhüllung enthalten sind, in Kontakt gebracht werden, um die Vernetzung zu erhalten.

6. Batterie nach einem der Ansprüche 1 bis 5, wobei die Vernetzung der Komponenten ein Harz ergibt, das aus Polyepoxiden, Vinylpolyestern, Polyacrylen, Polyacrylaten oder ihren Mischungen ausgewählt ist.

7. Batterie nach einem der Ansprüche 1 bis 6, wobei die Dichtung einen Hohlraum zwischen den Umhüllungen aufweist.

8. Batterie nach einem der Ansprüche 1 bis 7, wobei die Dichtung die Form eines Ringes aufweist, in dem jede Umhüllung einen Abschnitt des Rings ausmacht.

9. Batterie nach Anspruch 8, wobei die Dichtung aus zwei Umhüllungen gebildet ist, wobei jede der zwei Umhüllungen die Form eines halben Rings aufweist.

10. Batterie nach einem der Ansprüche 1 bis 9, wobei jede Umhüllung ein Ende, das ein Steckteil aufweist, und ein Ende aufweist, das ein Aufnahmeteil aufweist, wobei das Steckteil des Endes der einen der Umhüllungen in das Aufnahmeteil des Endes einer anderen Umhüllung eingefügt wird.

11. Batterie nach Anspruch 10, wobei das Ende des Steckteils durch eine Kappe geschlossen ist und das Steckteil ein Mittel zum Brechen (5) der Kappe aufweist.

12. Verwenden von einer Dichtung, um mindestens einen elektrochemischen Generator (7) in dem Einbaukasten einer Batterie zu verkeilen, wobei die Dichtung (3) mindestens zwei verformbare Umhüllungen (1, 1') aufweist, wobei jede Umhüllung eine Komponente enthält und eine Kappe (2, 2', 2", 2''') aufweist, wobei das Inkontaktbringen der Komponente, die in einer Umhüllung (1) enthalten ist, mit der Komponente, die in einer anderen Umhüllung (1') enthalten ist, eine Vernetzung der Mischung der zwei Komponenten bewirkt, wobei der elektrochemische Generator einen Behälter aufweist, der einen Boden aufweist, wobei der Boden des Behälters mit der Dichtung in Kontakt steht.

13. Verfahren zum Zusammenbauen einer Batterie, umfassend mindestens einen elektrochemischen Generator (7), wobei das Verfahren die folgenden Schritte aufweist:
- Bereitstellen eines Einbaukastens, umfassend eine Auflagefläche (8),
- Anbringen von mindestens einer Dichtung (3) in dem Einbaukasten in Kontakt mit der Auflagefläche (8), wobei die Dichtung (3) mindestens zwei verformbare Umhüllungen (1, 1') aufweist, wobei jede Umhüllung eine Komponente enthält und eine Kappe (2, 2', 2", 2''') aufweist, wobei das Inkontaktbringen der Komponente, die in einer Umhüllung (1) enthalten ist, mit der Komponente, die in einer anderen Umhüllung (1') enthalten ist, eine Vernetzung der Mischung der zwei Komponenten bewirkt,
- Anbringen von mindestens einem elektrochemischen Generator (7), der einen Behälter aufweist, der einen Boden aufweist, wobei der Boden des Behälters mit der Dichtung in Kontakt steht,
- Brechen der Kappen (2, 2', 2", 2''') und Inkontaktbringen der Komponenten, die in den Umhüllungen (1, 1') der Dichtung (3) enthalten sind, unter der mechanischen Beanspruchung, die von dem elektrochemischen Generator ausgeübt wird,
- Versteifung der Dichtung.

## Claims

1. A battery comprising at least one electrochemical cell (7) and at least one wedging means (9) of said electrochemical cell in the battery, the wedging means (9) being obtained after cross-linking components of a seal (3), said seal (3) comprising at least two deformable shells (1, 1'), each shell containing a component and comprises a sealing film (2, 2', 2", 2"') and in that a contacting of the component contained in a shell with the component contained in another shell causes cross-linking of a mixture of both components, said electrochemical cell (7) comprising a container including a bottom, the bottom of the container being in contact with the seal.

2. The battery according to claim 1, wherein the component contained in a shell is a base composition and the component contained in the other shell is a hardener composition, the base composition and the hardener composition being the components of a two-component adhesive.

3. The battery according to claim 1 or 2, wherein the shells are attached to each other by welding (4, 4'), preferably by vulcanization, by ultrasound or by adhesive bonding.

4. The battery according to one of claims 1 to 3, **characterized in that** the contacting of the components contained in each shell is carried out after breaking the sealing films of each shell.

5. The battery according to one of claims 1 to 4, wherein under the action of a mechanical stress, the sealing films break and the components contained in each shell are contacted to obtain the cross-linking.

6. The battery according to one of claims 1 to 5, wherein the cross-linking of the components results in a resin selected from among polyepoxides, polyvinyl esters, polyacrylics, polyacrylates or mixtures thereof.

7. The battery according to one of claims 1 to 6, wherein the seal has an empty space between said shells.

8. The battery according to one of claims 1 to 7, wherein the seal has the shape of a ring in which each shell represents a portion of the ring.

9. The battery according to claim 8, wherein the seal consists of two shells, each of the two shells having the shape of a half-ring.

10. The battery according to one of claims 1 to 9, wherein each shell comprises an end having a male portion and an end having a female portion, the male portion of the end of one of the shells being inserted into the female portion of the end of another shell.

11. The battery according to claim 10, wherein the end of the male portion is closed by a sealing film and the male portion comprises a means for breaking (5) the sealing film.

12. The use of a seal for wedging at least one electrochemical cell (7) in the battery tray, said seal (3) comprising at least two deformable shells (11, 11'), each shell containing a component and comprises a sealing film (2, 2', 2", 2"') and in that a contacting of the component contained in a shell (1) with the component (1') contained in another shell causes cross-linking of a mixture of both components, said electrochemical cell comprising a container including a bottom, the bottom of the container being in contact with the seal.

13. A method for assembling a battery comprising at least one electrochemical cell (7), said method comprising the following steps:
- making available a battery tray comprising a supporting surface (8),
- setting into place at least one seal (3) in the tray in contact with the supporting surface (8), said seal (3) comprising at least two deformable shells (11, 11'), each shell containing a component and comprising a sealing film (2, 2', 2", 2"'), a contacting of the component contained in a shell (1) with the component contained in another shell (1') causing cross-linking of a mixture of both components,
- setting into place at least one electrochemical cell (7) comprising a container including a bottom, the bottom of the container being in contact with the seal,
- breaking the sealing films (2, 2', 2", 2'") and bringing into contact the components contained in the shells (11, 11') of the seal (3) under the action of the mechanical stress exerted by the electrochemical cell,
- stiffening of the seal.
